# EUROPEAN PATENT APPLICATION

(11) **EP 3 156 978 A1**
(43) Date of publication of application: **19.04.2017**
(21) Application number: 15461566.0
(22) Date of filing: 14.10.2015
(51) Int. Cl.: G07C 9/00, G10L 17/00

(54) **A SYSTEM AND A METHOD FOR SECURE SPEAKER VERIFICATION**

(71) Applicant: Samsung Electronics Polska Sp. z o.o., 02-674 Warszawa (PL)
(72) Inventor: Bronakowski, Lukasz, 01-390 Warszawa (PL); Chochowski, Marcin, 03-044 Warszawa (PL); Gajewska-Dendek, Elzbieta, 91-864 Lodz (PL); Tkaczuk, Jakub, 84-230 Rumia (PL)
(74) Representative: Kancelaria Eupatent.pl Sp. z.o.o

(57) **Abstract**

A method for secure speaker verification, the method comprising the steps of: generating (501) a random, textual prompt for a user to speak; awaiting (502) for a user to speak the generated, textual prompt and recording the corresponding speech; in parallel to said speech recording (502), recording (503) ultrasound signals reflected from the user's face; subjecting (504) the recorded speech to automatic speech recognition in order to obtain a textual representation of the speech; detecting (505) user's liveness based on a correspondence of said recorded audio signal with said recorded ultrasound signal as well as based on the automatically recognized speech; executing (506) a text accuracy validation on said recorded speech subjected to the automatic speech recognition in comparison to the generated, textual prompt; and executing an authentication (507) of the user based on results of said detecting (505) user's liveness, and said text accuracy validation in order to verify whether the user was speaking the generated prompt, at the time of recording.

## Description

### TECHNICAL FIELD

The present invention relates to a system and method for secure speaker verification. In particular, the present invention relates to a method of secure, multi-modal speaker recognition system, which is designed to tackle a problem of spoofing and provides a reliable and secure approach for biometric identification altogether with liveness detection. This multi-modal solution, decreases a probability of a spoofing attack, which is a process of presenting a fake biometric sample in order to deceive a biometric authentication system.

### BACKGROUND OF THE INVENTION

There is a significant interest in biometrics and one of the challenges of this technical field is to create a biometric system that would not only be reliable, but also insensitive to spoofing attacks. State of the art biometric systems alone have proven to be sufficiently precise, among which there may be found systems based on recognition of iris (currently most accurate), voice, fingerprint, vein biometrics and more.

Voice biometrics is one of the most convenient authentication method for users, while having relatively low technical requirements (a single audio microphone), thus being highly attractive. Furthermore, the state of the art solutions comprising GMM modeling (Gaussian mixture model) or I-Vector approaches have proven to be reliable. However, it is relatively easy to deceive a voice-based biometric system. As a consequence various extensions have been proposed, which rely on multi-modal signal processing.

Since an authentication procedure depends solely on audio data processing, an impersonation attack, that can playback a previously recorded speech of a genuine user, is usually successful.

Speaker verification systems can be divided into two categories: text-dependent systems and text-independent systems. A text-dependent system asks a user to speak fixed utterances at an enrollment and verification phase, whereas the text-independent system may work with any utterance both in enrollment and verification phases. Recognition performance of a text-dependent system is usually higher than of text-independent systems.

One of the approaches to liveness detection in speaker recognition systems is proposed in patent application US 12/591,636 - "Device, system, and method of liveness detection utilizing voice biometrics". It discloses using a two stage verification. In the first stage a text-dependent system is used to compute a first comparison score, and in a second stage a text-independent system asks a user to speak a randomly generated utterance in order to compute a second comparison score. Beside comparing the acoustic properties of the spoken utterance, the proposed solution compares the result of its automatic transcription with the utterance requested by the system. Using randomly generated (unique) prompts prevents an attack, where the adversary playbacks a recorded, fixed utterance used in the text-dependent system.

This security approach, although not trivial, can be violated, for example by means of a text to speech and a voice conversion modules. First, the prompt is processed by a text to speech module generating a sample, synthesized utterance. The generated signal is then converted by a voice conversion engine to carry the user-specific acoustic features. Therefore, this approach still does not provide a required level of security.

Another approach to liveness detection, in speaker recognition systems, is to use audio channel information with information obtained from other sensors. The most popular second sensor is a camera directed at speaker's face. There are several methods for fusing these both sensory information.

The simplest is to use voice and face as two separate authentication factors, the results of which are fused by a simple logical rule e.g. both recognition scores confirm the users identity. More sophisticated techniques involve dynamic analysis of a camera input - a sequence of images are acquired while the user is speaking. The sequence of images is then analyzed and different features are extracted from the face image. These features are later synchronized with the audio signal and appropriate synchronization score calculated. These features might be DCT coefficients of a region around lips (e.g. Chollet, G., Landais, R., Hueber, T., Bredin, H., Mokbel, C., Perrot, P., & Zouari, L. (2007). Some experiments in audio-visual speech processing. In Advances in Nonlinear Speech Processing (pp. 28-56). Springer Berlin Heidelberg.).

This approach of presenting a passive user's image can be spoofed by presenting a user's photography together with the playback of recorded voice. Alternatively, there may be generated an avatar with a user's face. Synthesized (or recorded) speech can be synchronized with the avatar's lips. Furthermore, the audio-video synchronization will not work in poor lighting conditions. Therefore, this approach still does not provide a required level of security.

Another way to detect liveness of a subject is to analyze a sequence of eye images. This analysis may be directed to detect eye movements or spatial metric based on a distance from a sensor e.g. PCT/US2013/043,905.

The solutions based on eye analysis are also very sensitive for spoofing attacks. Furthermore, they do require a use of a high resolution camera. Especially observation of Purkinje reflections is a challenge, since often only the first Purkinje reflection is visible, while the higher order reflections depend on the angle of light projection.

The analysis of pupil radius is not very convenient for user, since it relies on changing visible light intensity. Thus, although more secure, this method is very inconvenient for users.

It would be thus advantageous to present a convenient yet secure system and method for secure speaker verification.

The aim of the development of the present invention is an improved and convenient, from users' perspective', system and method for secure speaker verification.

### SUMMARY

There is disclosed a method for secure speaker verification, the method being comprising the steps of: generating a random, textual prompt for a user to speak; awaiting for a user to speak the generated, textual prompt and recording the corresponding speech; in parallel to said speech recording, recording ultrasound signals reflected from the user's face; subjecting the recorded speech to automatic speech recognition in order to obtain a textual representation of the speech; detecting user's liveness based on a correspondence of said recorded audio signal with said recorded ultrasound signal as well as based on the automatically recognized speech; executing a text accuracy validation on said recorded speech subjected to the automatic speech recognition in comparison to the generated, textual prompt; executing an authentication of the user based on results of said detecting user's liveness, and said text accuracy validation in order to verify whether the user was speaking the generated prompt, at the time of recording.

Preferably, the method further comprises a step of speaker verification wherein the authentication step is also based on results of said speaker verification.

Preferably, said speaker verification is a biometric speaker verification score based on speakers', pre-recorded sample speech based on which a user model is created and stored in a computer memory.

Preferably, in order to obtain said biometric speaker verification score, audio features generated on voiced frames, of the recorded speech, are probabilistically tested against user's pre-trained statistical model.

Preferably, said detecting user's liveness comprises the steps of: dividing the ultrasound signal into overlapping frames; for each frame, extracting time-based features and frequency-based features, which are finally combined; analyzing the ultrasound signal on a frame basis in order to align the ultrasound frames, with the audio signal; calculating power spectrum of the ultrasound signal, in a specified frequency range; using the power spectrum, and its natural logarithm, within the chosen frequency bands, as features; using the features, the ultrasound signal is segmented into sonemes, which are equivalents of acoustic phonemes in ultrasound signal domain; outputting a liveness detection score reflecting a correspondence of audio phonemes and ultrasound sonemes.

Preferably, the sonemes represent characteristic classes for ultrasonic signal, grouping phonemes having similar equivalent in ultrasound whereas the sonemes are time segments equivalent to characteristic for a chosen language speech elements or their aggregations.

Preferably, the step of segmenting into sonemes is based on a classifier, which is trained on a basis of ultrasound signal or simultaneous recordings of audio and ultrasound signal.

Preferably, the step of dividing the ultrasound signal into overlapping frames outputs 20 ms frames, overlapping by 10 ms, wherein each frame is subsequently multiplied by a Blackman window function.

Preferably, the language speech elements of phonemes or diphones or triphones are associated with at least one ultrasound representation.

There is also disclosed a computer program comprising program code means for performing all the steps of the computer-implemented method as described above when said program is run on a computer.

There is also disclosed a computer readable medium storing computer-executable instructions performing all the steps of the computer-implemented method as described above when executed on a computer.

There is also disclosed a system for secure speaker verification the system comprising: a random prompt generator configured to generate a random textual prompt; an audio recorder configured to record the random textual prompt uttered by a user; an automatic speech recognition module configured to receive the recorded utterance and output a textual representation of the recorded speech; a text accuracy module configured to compare said textual representation with the generated random, textual prompt; an ultrasound recorder having a signal acquisition module comprising an ultrasonic transducer, which is responsible for emitting and acquiring the ultrasonic signal wherein the ultrasound recorder is configured to record an ultrasound signal while the audio recorder records the random textual prompt uttered by a user; a liveness detection module configured to detect a correspondence of said recorded audio signal with said recorded ultrasound signal as well as based on the automatically recognized speech provided by the automatic speech recognition module; an authentication module configured to receive a liveness detection score, from the liveness detection module, and a text accuracy score, from the text accuracy module, and is configured to verify whether the user was speaking the generated prompt, at the time of recording.

Preferably, the random prompt generator has access to a database of prompts and is based on semantically unpredictable sentences generator, which is supplied with words taken from datasets of phonetically diverse sentences.

Preferably, the ultrasound recorder emits a continuous wave Doppler ultrasound and/or pulse wave Doppler ultrasound.

Preferably, the automatic speech recognition module further comprises a language recognition module and/or a noise reduction module.

### BRIEF DESCRIPTION OF FIGURES

These and other objects of the invention presented herein, are accomplished by providing a system and method for secure speaker verification. Further details and features of the present invention, its nature and various advantages will become more apparent from the following detailed description of the preferred embodiments shown in a drawing, in which:
Fig. 1 shows an ultrasound user detection module;
Fig. 2 presents a diagram of the system according to the present invention;
Fig. 2A shows a three-step S1-S3 authentication of a user;
Fig. 3 depicts feature(s) extraction;
Figs. 4A-C show sonemes classification; and
Fig. 5 presents a diagram of the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

The main concept of the present invention is a multi-modal combination of biometric task with liveness detection based on ultrasound signal.

The biometric task is based on voice recognition of a speaker, while the liveness detection is realized by means of a multi-modal approach, which uses an ultrasonic signal and its correlation with a corresponding audio recording of speaker's voice.

The easiest way to deceive a voice based biometric system would be to reproduce user's speech, which is possible in following ways: (a) with recorded before speech, working for text-independent systems, or with a finite dictionary of utterances; or with a voice conversion system for text-dependant system with Automatic Speech Recognition.

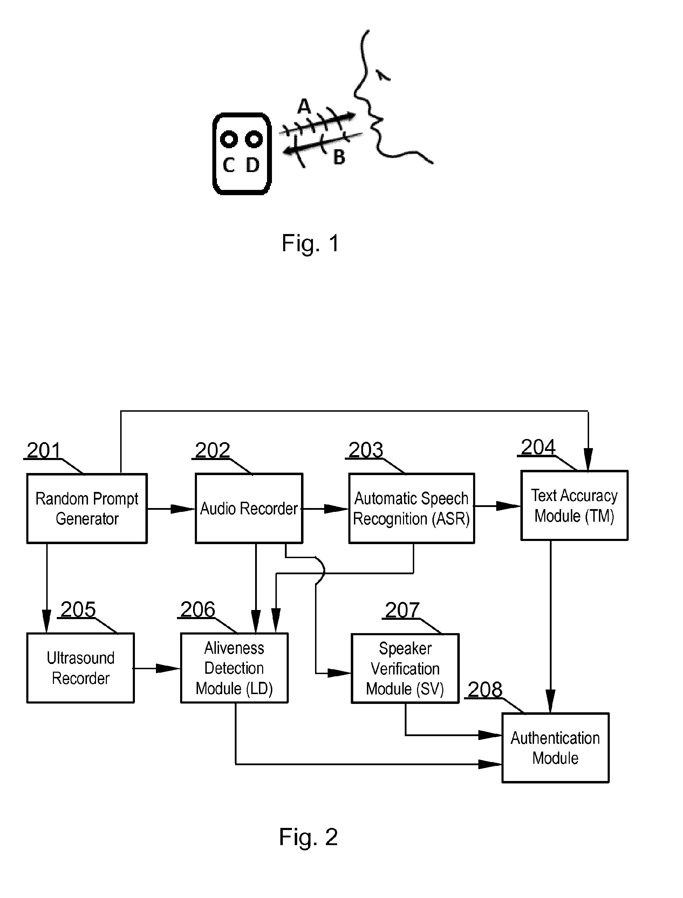

Therefore, the present invention implements an improvement based on ultrasound waves emitted in a direction of user's mouth. Fig. 1 shows an ultrasound user detection module. The ultrasound waves (A) are reflected from user's face (B) and can be received by a transducer (D) located preferably next to the emitter (C). In a preferred embodimentm the ultraasound signal is a continuous wave, but pulse waves are also possible in other embodiments.

The transducer (D), in one embodiment, has a resonant frequency of 40 kHz. The ultrasonic transmitter directs a narrow-beam, e.g., 40 kHz, ultrasonic signal at the face of the user of the interface. The signal emitted by the emitter may be a continuous tone that can be represented as s(t)=sin(2πfct), where fc, is the emitted frequency, e.g., 40 kHz. In order to record the ultrasound signal with same frequency sampling parameters as the audio signal, in one embodiment fc was mixed with a constant sinusoidal frequency of 35.6 Hz from generator. As a consequence, the heterodynes - the mixed (sum and difference) frequencies can be observed in the signal. Therefore, when the ultrasound signal is sampled 16 kHz, one can observe in 8 kHz bandwidth with the emitted frequency peak can be observed in 4.4 Hz.

When the user is moving mouth and cheeks during speech, the reflected ultrasonic signal changes its frequency. The observed change in frequency of a wave is known as the Doppler Effect.

The acquired ultrasonic signal is dependent on uttered speech, and cannot be faked with simple movements of a monitor, mannequin or a rigid object. According to the present invention, the information, carried by the received ultrasound signal, is used for liveness detection.

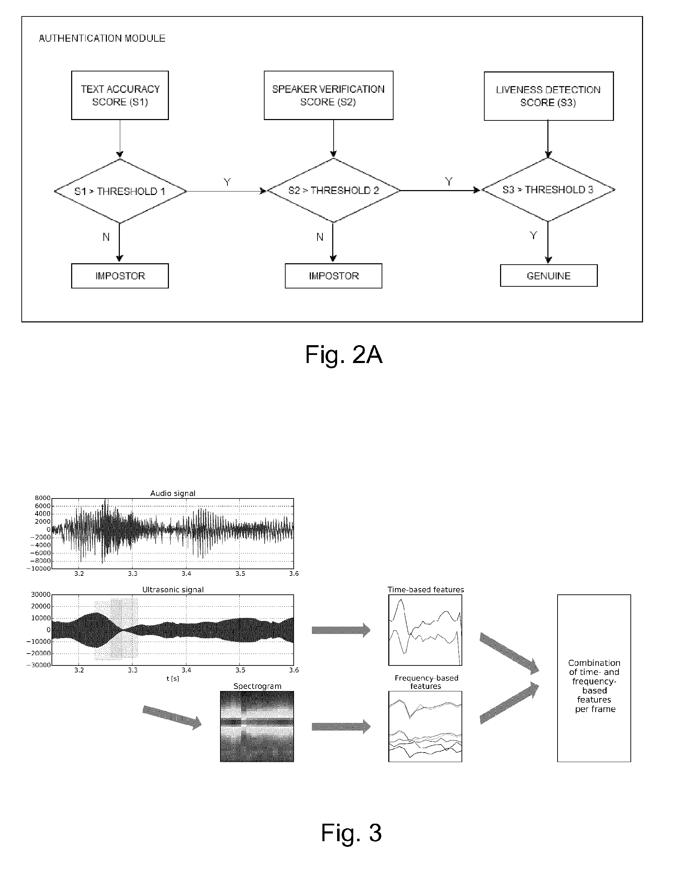

Fig. 2 presents a general diagram of the system according to the present invention. The system may be realized using dedicated components or custom made FPGA (Field-Programmable Gate Array) or ASIC (Application Specific Integrated Circuit) circuits. The system may comprise a suitable data bus communicatively coupled with other components of the system.

The first module of the system (201) is a random prompt generator. This module generates a random textual prompt (based on its database of prompts and suitable rules), preferably displayed on a screen, which will be uttered by a user. The generation of sentences should take into consideration the statistical distribution of phonemes in the user's language (may take into consideration existing databases such as TIMIT database).

In a preferred embodiment the random prompt generator may be based on Semantically Unpredictable Sentences (such as: C. Benoît, M. Griceb, V. Hazanc The SUS test: A method for the assessment of text-to-speech synthesis intelligibility using Semantically Unpredictable Sentences Speech Communication, Volume 18, Issue 4, June 1996, Pages 381-392) generator, which is supplied with words (divided into classes: nouns, verbs, adjectives) taken from datasets of phonetically diverse sentences, such as TIMIT (Acoustic-Phonetic Continuous Speech Corpus https://catalog.ldc.upenn.edu/LDC93S1 - ISBN: 1-58563-019-5) or Harvard Corpus (http://www.cs.columbia.edu/-hgs/audio/harvard.html - From the appendix of: IEEE Subcommittee on Subjective Measurements IEEE Recommended Practices for Speech Quality Measurements. IEEE Transactions on Audio and Electroacoustics. Vol 17, 227-46, 1969).

Random word probing from these datasets, combined with minimum sentence length (e.g. 4-second utterance time duration) allows acquiring phonetically diverse utterances sufficient for reliable speaker verification solution.

The uttered speech, based on the random prompt, is recorded by an audio recorder (202) and passed to an automatic speech recognition module (ASR) (203). The ASR module (203) outputs a textual representation of the recorded speech and this text is compared by a text accuracy module (204) with the generated random, textual prompt.

The audio recorder (202) is configured to record the audio signal uttered by the user reading the generated random prompt. Any known audio recording techniques may be applied in order to obtain a recorded representation of the user's utterance. The recorded audio is preferably stored in a computer readable memory in a digital form, which facilitates its further processing.

Another module of the system is an ultrasound recorder (205). Its signal acquisition module comprises an ultrasonic transducer, which is responsible for emitting and acquiring the ultrasonic signal (Fig. 1). This equipment includes an ultrasound emitter, which produces the ultrasound signal and an ultrasonic receiver, which captures the signal reflected from the speaker face.

According to the present invention, usage of continuous wave Doppler ultrasound is sufficient, although a possibility to use pulse wave Doppler ultrasound may be implemented as well or both kinds. The ultrasonic signal is recorded simultaneously with the audio signal.

It is sufficient to operate on a single ultrasound recording transmitter, however the extension of the ultrasound recorder (205) module realized as utilization of multiple ultrasound recorders, which may be realized in form of matrix of ultrasound microphones, is also possible and may increase the quality of the basic solution presented herein.

The ASR module (203) preferably generates a transcription of the recorded audio speech on two levels i.e. phonemes and text. The process requires a pre-trained statistical models such as HMM + GMM (as in, for example: Renals and Hain (2010). Speech Recognition, Computational Linguistics and Natural Language Processing Handbook, Clark, Fox and Lappin (eds.), Blackwells) or DNN (as in, for example: Deng, L., Hinton, G. E. and Kingsbury, B. (2013) New types of deep neural network learning for speech recognition and related applications: An overview In IEEE International Conference on Acoustic Speech and Signal Processing (ICASSP 2013) Vancouver, 2013) and is language dependent.

Additionally, its accuracy depends on noise level. In order to overcome the language and noise dependence, the ASR module (203) may be extended with audio-based units: (a) a language recognition module (as in, for example: G.D. MARTÍNEZ, O. PLCHOT, L. BURGET, O. GLEMBEK, P. MATEJKA Language Recognition in iVectors Space, In: Proceedings of Interspeech 2011. Florence: International Speech Communication Association, 2011, pp. 861-864. ISBN 978-1-61839-270-1. ISSN 1990-9772.); and/or a noise reduction module (e.g. adaptive filters).

The text accuracy module (204) receives input from the ASR module (203) and validates correspondence of the generated random text prompt (201) with the recognized speech by the ASR module (203). It outputs a text accuracy score. The text Accuracy module compares two texts: original prompt, and the text from ASR, for example by means of a Levenshtein distance, which should take into account the text length. If the distance (d) divided by original prompt's length (N) is smaller than defined threshold (e.g. 10%)_the accuracy is assumed. High accuracy of the text accuracy module (204), combined with randomness of prompts reduces a probability of an impostor attack.

Another path of the system's connections, shown in Fig. 3, aggregates results obtained by the ASR module (203), the audio recorder (202) and the ultrasound recorder (205) into a Liveness Detection Module (LD) (206).

The LD module (206) analyzes the received ultrasound signal and verifies its correspondence to the simultaneously recorded audio signal. When sufficient correspondence has been found it may be concluded that a person was speaking the random prompt given.

The ultrasound signal, reflected from a user's face, carries a huge amount of information about uttered speech, which is enough to synthesize the audible audio signal, which can be used for voice activity detection (such as:. Kalgaonkar, B. Raj, Ultrasonic Doppler Sensor for Voice Activity Detection, IEEE Signal Processing Letters, vol. 14, no. 10, pp. 754-757, 2007. [Online]. Available: IEEE Xplore), speaker recognition (such as: K. Kalgaonkar, B. Raj, Ultrasonic doppler sensor for speaker recognition, In Proceedings of the IEEE International Conference on Acoustics, Speech, and Signal Processing, ICASSP 2008, March 30 - April 4, 2008, Las Vegas, U.S.A., pp. 4865 - 4868) or even speech synthesis tasks (such as: A. R. Toth, K. Kalgaonkar, B. Raj, T. Ezzat, Synthesizing Speech From Doppler Signals, In Proceedings of the IEEE International Conference on Acoustics, Speech, and Signal Processing, ICASSP 2010, 14-19 March 2010, Dallas, U.S.A. Available: IEEE Xplore, http://www.ieee.org).

The ultrasound signal reflected, from speaker's mouth/face, dynamically changes with an uttered speech, additionally the recorded signal is a superposition of waves reflected from an area restricted to the nearby parts of speaker's lips. Due to a complex geometry of human face, it is practically impossible to imitate this signal with a moving, rigid structure. Therefore, the aforementioned analysis of correspondence of the ultrasound with audio is a precise test of liveness of a speaking user.

The LD module (206) can be realized by means of the following three stages. The first stage is (1) Feature Extraction, followed by stage (2) Soneme Classification and finalized by stage (3) Phoneme-Soneme Correspondence Scoring.
Fig. 3 depicts ultrasound signal feature(s) extraction. First, the ultrasound signal is divided into overlapping frames. For each frame, time-based features and frequency-based features are extracted, which are finally combined.

The recorded ultrasound signal (205) is analyzed on frame basis: the overlapping frames are chosen with corresponding segment's and shift's durations, which allow alignment (of the ultrasound frames) with the audio signal (202). For each frame of the ultrasound signal, feature descriptors are extracted and further expanded with context information, which can include the delta, delta-delta (acceleration) or stacking of adjacent frames.

The generated ultrasound features can be time-based, frequency based or combination of both as shown in Fig. 3. Time-based features can comprise the signal or the signal's envelope characteristics such as linear (e.g. mean amplitude) and nonlinear dynamics time series analysis (e.g. fractal-based-dimension; B Henry, N Lovell, F Camacho, Nonlinear dynamics time series analysis Nonlinear biomedical signal processing: Dynamic analysis and modeling 2, 2001).

In spectrum-domain, the extracted features describe the Doppler Effect that occur in the reflected ultrasound signal and its shift's amplitude caused by facial movements. The power spectrum of the reflected ultrasound signal, for each specified frequency range, is calculated. The power spectrum (and its natural logarithm) within chosen frequency bands are used as features.

The frequency bands can be dense (equal to frequency bins in FFT algorithm) or broad (up to whole frequency range). A variety of different spectrum-domain signal descriptors can be used, like: PLP, Mel Cepstral Coefficients and Mel Generalized Cepstral Coefficients. Moreover, the extracted features can be generated by a trained Neural Network.

The Soneme Classification process, of the LD module (206), may be executed as follows. Using the extracted features, the ultrasonic signal is segmented into sonemes, which are equivalents of acoustic phonemes in ultrasound signal domain. To this end, the LD module (206) comprises of may communicate with a database of sonemes.

Sonemes represent characteristic classes for ultrasonic signal, grouping phonemes having similar equivalent in ultrasound. Sonemes are time segments equivalent to characteristic for a chosen language speech elements (or their aggregations), such as: Phonemes or Diphones or Triphones.

For example, a phoneme 'e' may be associated with at least one ultrasound representation. The more ultrasound representations associated with a phoneme, the better, since they may take into account different age, gender, accent and other characteristics of speakers.

In order to detect sonemes, a classifier is trained e.g. using a database of simultaneous recordings of audio and ultrasound signal. The classification can be implemented with well-known methods like, among others: GMM, logistic regression, naïve Bayes, neural networks, DNN, LDA or SVM.

The Phoneme-Soneme Correspondence Scoring process, of the LD module (206), may be executed as follows. A Deep Neural Network, trained on combined audio with ultrasound executes a task of recognition of audio phonetic classes. The recognized phonetic classes are further compared to ASR (203) result and a correspondence score is generated.

The output, liveness detection score, of the LD module (206), reflects a correspondence of audio phonemes and ultrasound sonemes. The resulting score may be computed using other machine learning algorithms like HMM or neural networks.

Returning, back to the high level description of the system, the recorded audio, is in parallel passed to a Speaker Verification Module (hereinafter referred to as SV) (207).

The recorded audio of the speech is first classified into unvoiced and voiced frames, the latter are being analyzed by means of statistical methods. The process of frame classification can be realized by means of GMM models, suitably trained in a supervised way (for example by a method disclosed in: D. Ying, Y. Yan, J. Dang, F. K. Soong, Voice Activity Detection Based on an Unsupervised Learning Framework, IEEE Trans. on ASLP, vol. 19, no. 8, November 2011). Frequency based features are preferably generated for voiced frames only.

State of the art (Tomi Kinnunena, Haizhou Lib; An overview of text-independent speaker recognition: From features to supervectors Speech Communication Volume 52, Issue 1, January 2010, Pages 12-40) solutions for Speaker Verification problem should be used based on MFCC (Mel Frequency Cepstral Coefficients) and/or PLP (Perceptual Linear Predictive Cepstral Coefficients) features with delta and delta-delta context information or novel but promising approaches based, for example on Deep Neural Networks (such as: Geoffrey Hinton, Li Deng, Dong Yu, Abdel-rahman Mohamed, Navdeep Jaitly, Andrew Senior, Vincent Vanhoucke, Patrick Nguyen, Tara Sainath George Dahl, and Brian Kingsbury Deep Neural Networks for Acoustic Modeling in Speech Recognition. Signal Processing Magazine, 2012).

The audio features generated on voiced frames are probabilistically tested (e.g. Maximum Likelihood Estimation algorithm) against user's pre-trained statistical model. The most common approaches to solve this problem are GMM-based and I-Vectors (such as: N. Dehak, R. Dehak, P. Kenny, N. Brummer, P.Ouellet and P. Dumouchel Support Vector Machine versus Fast Scoring in the Low-Dimensional Total Variability Space for Speaker Verification,. In Proc INTERSPEECH 2009, Brighton, UK, September 2009).

As a result, a biometric Speaker Verification score is computed. In a preferred embodiment, some amount of speakers' sample speech is needed in advance in order to create the user model that may be stored in a computer memory, the SV module (207) has access to.

Finally, the Speaker Verification score, the liveness detection score and the text accuracy score are fed into an authentication module (208). All the scores returned by ASR, TM and LD modules are aggregated by a final meta-classifier, a task of which is to verify whether the user was speaking the generated prompt, at the time of recording, the generated prompt positioned in front of the recording device, e.g. a mobile device.

Each of: the Text Accuracy module, the Speaker Verification module and the Liveness Detection module compute a score, which are passed to the Authentication Module (208). Each score is compared with requested confidence interval in order to confirm the authenticity of the user

Fig. 2A shows a three-step S1-S3 authentication of a user. The first verification S1 is a text accuracy score. If a score S1 is above a given threshold then an impostor attack is provisionally ruled out and there is executed step 2 verification. Step 2 refers to speaker verification score. If a score S2 is above a given threshold then an impostor attack is provisionally ruled out and there is executed step 3 verification. Step 3 refers to liveness detection score. If a score S3 is above a given threshold then an impostor attack is ruled out since all three steps resulted in acceptable detection accuracy levels.

The following section of the specification presents an exemplary embodiment of the present invention. The embodiment is implemented by means of a Gaussian Mixture Model (GMM) based soneme classification.

In order to execute features extraction by the LD module (206), the ultrasound signal is preferably decomposed into 20 ms frames, overlapping by 10 ms, wherein subsequently each frame is subsequently multiplied by a Blackman window function.

The features used in this embodiment are frequency-based, which requires a computation of a spectrum density of the enframed signal. The frequency range is divided into symmetric sub-bands around the frequency of the emitted ultrasound wave (fe). The widths of the sub-bands are growing exponentially with the distance of each band from the frequency fe. A logarithm (e.g. natural logarithm) of total power spectrum in each sub-band creates a separate feature.

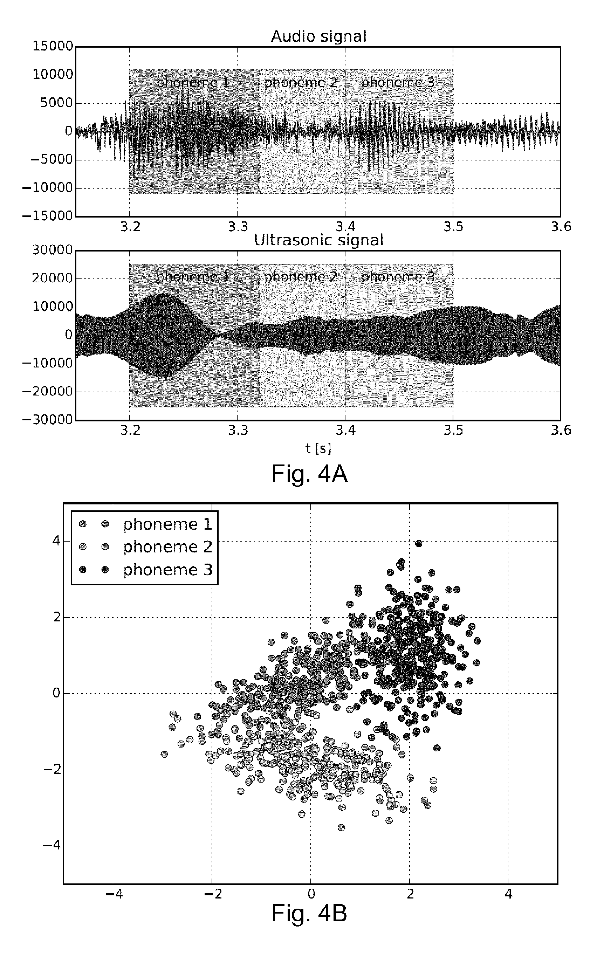

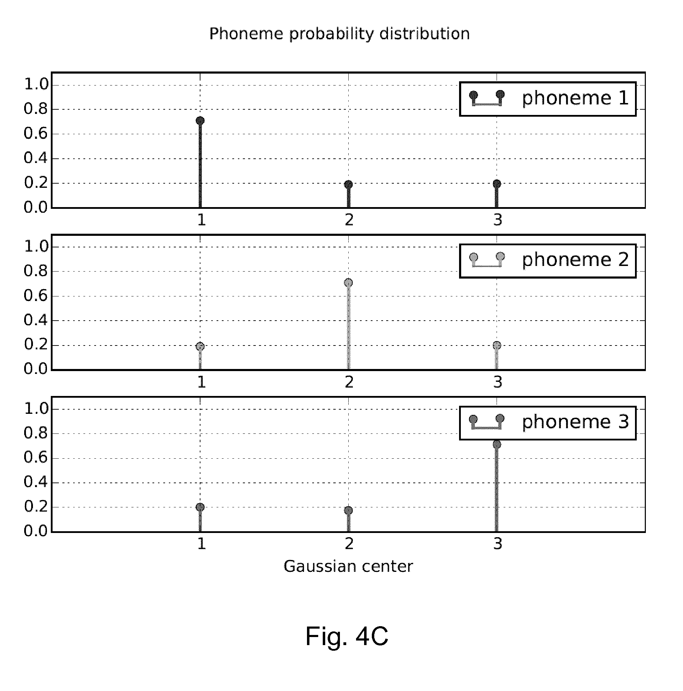

In order to execute sonemes classification by the LD module (206) a process shown in Figs. 4A-C has been implemented. Figs. 4A-C are a schematic diagram of soneme classification wherein: (A) depicts simultaneously recorded audio and ultrasonic signals being labeled with a phonetic transcription; (B) the ultrasonic data frames are modeled by means of the GMM, representing multiple sonemes; and (C) for each acoustic class a probability distribution of soneme observation is generated.

To this end, a suitable database of audio and ultrasonic signals, recorded simultaneously, is collected and stored in a suitable computer readable memory (not shown in drawings).

The ultrasonic signal is preferably divided into frames and a feature vector is calculated for each frame. The distribution of feature vectors from the whole database is modeled with e.g. the GMM. Each feature vector is then labeled with a Gaussian that gives the highest probability for that feature vector. This labeling is called soneme classification.

The audio signal is transcribed by means of the ASR module (203). After aligning the audio signal with transcription, the audio signal is framed (with the same resolution as the ultrasonic signal) and each frame is labeled with the phoneme it belongs to. Since the audio and ultrasonic signals are synchronized, so are the frames. There is thus obtained a sample of joint discrete soneme-phoneme distribution that the system may tabulate.

In order to execute Phoneme-Soneme Correspondence Scoring by the LD module (206) the system implements the following as previously explained. During the verification audio and ultrasonic signals are simultaneously recorded. The audio signal is transcribed and framed and each frame is labeled with appropriate phoneme. The ultrasonic signal is framed and each frame is labeled with appropriate soneme according to soneme classification. Next, for each ultrasonic frame, basing on the estimated soneme-phoneme probabilities, we get the probability of labeled soneme conditioned on labeled phoneme. Logarithms (e.g. natural logarithms) of these probabilities are summed over the whole utterance. If the obtained value meets a defined threshold, a correspondence is assumed. The threshold is, for example, determined by a 95% confidence interval for recording dataset of the same sentence uttered by multiple people.

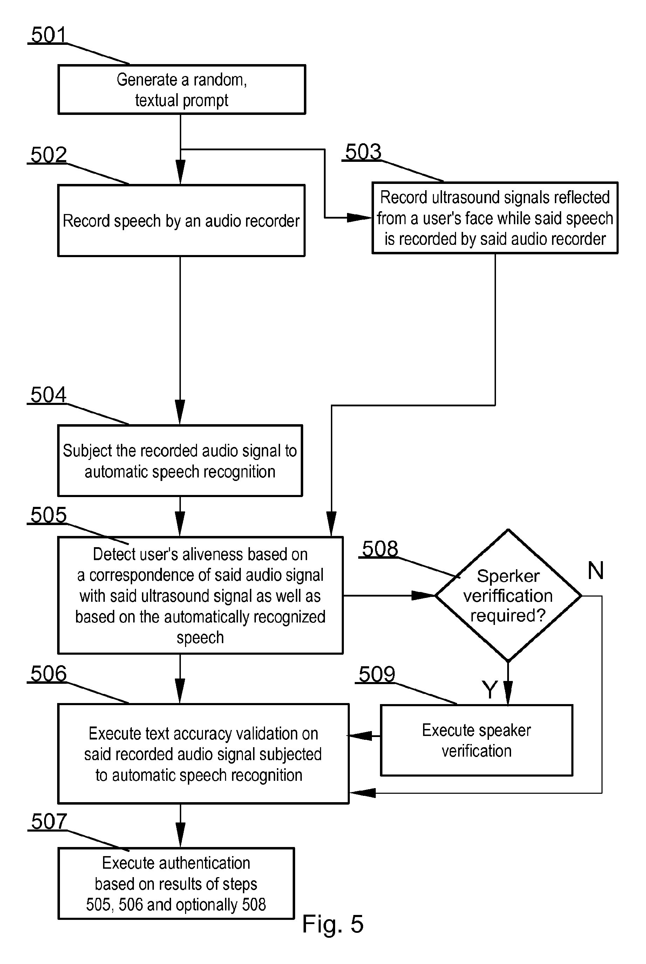

Fig. 5 presents a diagram of the method according to the present invention. The method starts at step (501) from generating a random, textual prompt (201) for a user to speak. This prompt will typically be displayed on a screen of a mobile device. Subsequently, at step (502), the system awaits for a user to speak and records speech by an audio recorder (202). In parallel to step (502), at step (503), the system records (205) ultrasound signals reflected from a user's face, while said speech is recorded by said audio recorder (502).

When said audio and ultrasound signals have been recorded, the system executes two steps either in parallel or sequentially. At step (504), the recorded audio signal (speech signal) is subjected to an automatic speech recognition in order to obtain a textual representation of the audio. The other step (505), relates to detection of user's liveness based on a correspondence of said audio signal with said ultrasound signal as well as based on the automatically recognized speech, as previously described with reference to the LD module (206).

Subsequently, there is executed at step (506) where there is run a text accuracy validation on said recorded audio signal subjected to automatic speech recognition (module (204)).

At this point one might be interested in either performing speaker verification, in order to verify the user's identity or in using the available results, of steps (505) and (506), only to verify that the system interacts with a living person and not a bot.

If the speaker verification is required (508), step (509) executes the speaker verification on said recorded audio signal at step (502), and the result is passed to the authentication step (507). This process has been previously explained with reference to the SV module (207). In case not required, the speaker verification is not performed.

Finally, at step (507), there is executed an authentication of the user based on results of steps (505) and (506) or (505), (506) and (509).

The proposed invention addresses various limitations of liveness detection methods in biometric systems. The merit of the invention is to utilize the combination of ultrasound signal and acoustic signal for liveness detection. As a result, the solution proposed herein is: (A) more general (the verification prompt database is not limited), (B) convenient (the user does not need enroll with US sensor present) and (C) secure for the user (the dataset of random prompts is too large to create a real risk that all user's recordings could be collected by an intruder.).

The present invention is a user-independent method for liveness detection based on correlating audio signal and ultrasonic signal reflected from user's mouth. This results in improved user authentication. Therefore, the invention provides a useful, concrete and tangible result.

The aforementioned authentication has been presented as an implementation in a particular device, shown in Fig. 2, which processes audio and ultrasound signals. Therefore, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for secure speaker verification may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for secure speaker verification, the method being **characterized in that** is comprises the steps of:
- generating (501) a random, textual prompt for a user to speak;
- awaiting (502) for a user to speak the generated, textual prompt and recording the corresponding speech;
- in parallel to said speech recording (502), recording (503) ultrasound signals reflected from the user's face;
- subjecting (504) the recorded speech to automatic speech recognition in order to obtain a textual representation of the speech;
- detecting (505) user's liveness based on a correspondence of said recorded audio signal with said recorded ultrasound signal as well as based on the automatically recognized speech;
- executing (506) a text accuracy validation on said recorded speech subjected to the automatic speech recognition in comparison to the generated, textual prompt; and
- executing an authentication (507) of the user based on results of said detecting (505) user's liveness, and said text accuracy validation in order to verify whether the user was speaking the generated prompt, at the time of recording.

2. The method according to claim 1, **characterized in that** it further comprises a step of speaker verification (509) wherein the authentication (507) step is also based on results of said speaker verification (509).

3. The method according to claim 2, **characterized in that** said speaker verification (509) is a biometric speaker verification score based on speakers', pre-recorded sample speech based on which a user model is created and stored in a computer memory.

4. The method according to claim 3, **characterized in that** in order to obtain said biometric speaker verification score, audio features generated on voiced frames, of the recorded speech, are probabilistically tested against user's pre-trained statistical model.

5. The method according to claim 1, **characterized in that** said detecting (505) user's liveness comprises the steps of:
- dividing the ultrasound signal into overlapping frames;
- for each frame, extracting time-based features and frequency-based features, which are finally combined;
- analyzing the ultrasound signal on a frame basis in order to align the ultrasound frames, with the audio signal;
- calculating power spectrum of the ultrasound signal, in a specified frequency range;
- using the power spectrum, and its natural logarithm, within the chosen frequency bands, as features;
- using the features, the ultrasound signal is segmented into sonemes, which are equivalents of acoustic phonemes in ultrasound signal domain; and
- outputting a liveness detection score reflecting a correspondence of audio phonemes and ultrasound sonemes.

6. The method according to claim 5, **characterized in that** sonemes represent characteristic classes for ultrasonic signal, grouping phonemes having similar equivalent in ultrasound whereas the sonemes are time segments equivalent to characteristic for a chosen language speech elements or their aggregations.

7. The method according to claim 5, **characterized in that** the step of segmenting into sonemes is based on a classifier, which is trained on a basis of ultrasound signal or simultaneous recordings of audio and ultrasound signal.

8. The method according to claim 5, **characterized in that** the step of dividing the ultrasound signal into overlapping frames outputs 20 ms frames, overlapping by 10 ms, wherein each frame is subsequently multiplied by a Blackman window function.

9. The method according to claim 6, **characterized in that** language speech elements of phonemes or diphones or triphones are associated with at least one ultrasound representation.

10. A computer program comprising program code means for performing all the steps of the computer-implemented method according to claim 1 when said program is run on a computer.

11. A computer readable medium storing computer-executable instructions performing all the steps of the computer-implemented method according to claim 1 when executed on a computer.

12. A system for secure speaker verification the system being **characterized in that** is comprises:
- a random prompt generator (201) configured to generate a random textual prompt;
- an audio recorder (202) configured to record the random textual prompt uttered by a user;
- an automatic speech recognition module (203) configured to receive the recorded utterance and output a textual representation of the recorded speech;
- a text accuracy module (204) configured to compare said textual representation with the generated random, textual prompt;
- an ultrasound recorder (205) having a signal acquisition module comprising an ultrasonic transducer, which is responsible for emitting and acquiring the ultrasonic signal wherein the ultrasound recorder (205) is configured to record an ultrasound signal while the audio recorder (202) records the random textual prompt uttered by a user;
- a liveness detection module (206) configured to detect a correspondence of said recorded audio signal with said recorded ultrasound signal as well as based on the automatically recognized speech provided by the automatic speech recognition module (203); and
- an authentication module (208) configured to receive a liveness detection score, from the liveness detection module (206), and a text accuracy score, from the text accuracy module (204), and is configured to verify whether the user was speaking the generated prompt, at the time of recording.

13. The system, according to claim 12, **characterized in that** the random prompt generator (201) has access to a database of prompts and is based on semantically unpredictable sentences generator, which is supplied with words taken from datasets of phonetically diverse sentences.

14. The system, according to claim 12, **characterized in that** the ultrasound recorder (205) emits a continuous wave Doppler ultrasound and/or pulse wave Doppler ultrasound.

15. The system, according to claim 12, **characterized in that** the automatic speech recognition module (203) further comprises a language recognition module and/or a noise reduction module.
